# EUROPÄISCHE PATENTANMELDUNG

(11) **EP 2 827 153 A1**
(43) Veröffentlichungstag der Anmeldung: **21.01.2015**
(21) Anmeldenummer: 13176819.4
(22) Anmeldetag: 17.07.2013
(51) Int. Cl.: G01P 13/04, G01R 31/34, H02J 3/44, H02P 1/02

(54) **Ermittlung einer Motordrehrichtung**

(71) Anmelder: Siemens VAI Metals Technologies GmbH, 4031 Linz (AT)
(72) Erfinder: Hartl, Franz, 4720 Kallham (AT); Rohrhofer, Andreas, 4020 Linz (AT); Weinzinger, Michael, 4020 Linz (AT); Lehofer, Martin, 4050 Traun (AT)
(74) Vertreter: Maier, Daniel Oliver

(57) **Zusammenfassung**

Die Erfindung betrifft ein Verfahren zur Ermittlung einer Motordrehrichtung eines über Versorgungsleitungen (3.1, 3.2) mit einer mehrphasigen Versorgungsspannung (5) betriebenen Elektromotors (10). Dabei werden die relativen Phasenverschiebungen zwischen den an den Versorgungsleitungen (3.1, 3.2) anliegenden Phasenspannungen (L1, L2, L3) ermittelt. Ferner werden, ohne den Elektromotor (10) in Drehung zu versetzen, an die Versorgungsleitungen (3.1, 3.2) elektrische Identifikationssignale ausgegeben, die eine eindeutige Zuordnung der ermittelten Phasenverschiebungen zu den Versorgungsleitungen (3.1, 3.2) ermöglichen. Die Identifikationssignale werden motorseitig ausgelesen und aus den motorseitig ausgelesenen Identifikationssignalen wird die Motordrehrichtung ermittelt. Ferner betrifft die Erfindung eine Vorrichtung zur Durchführung dieses Verfahrens.

## Beschreibung

Die Erfindung betrifft ein Verfahren zur Ermittlung einer Motordrehrichtung eines über Versorgungsleitungen mit einer mehrphasigen Versorgungsspannung betriebenen Elektromotors. Ferner betrifft die Erfindung eine Vorrichtung zur Durchführung des Verfahrens.

In Industrieanlagen wie beispielsweise Hochöfen, Stahlwerken, Walzwerken und Raffinerien wird eine Vielzahl von elektrischen Antrieben verbaut. Bei der Montage dieser Antriebe werden diese in der Regel von einem Montageunternehmen eingebaut und an die Stromversorgung angeschlossen. Die elektrische Installation wird ebenfalls von einem Elektromontageunternehmen oder einem anderen Dritten vorgenommen. Das erste Einschalten eines Motors in der Industrieanlage erfolgt meist erst später, oftmals durch den Anlagenbauer selbst bei der Inbetriebnahme.

Manche Motoren dürfen dabei nur in einer Drehrichtung betrieben werden. Dies kann bauartbedingte oder prozessbedingte Gründe haben. Derartige bauartbedingte Gründe sind z. B., dass eine mit dem Motor verbundene Maschine oder Maschinenbauteile so gefertigt sind, dass sie nur in einer Richtung betrieben werden können oder dürfen, wie beispielsweise Förderbänder mit Rücklaufsperre oder bestimmte Kompressoren. Ein prozessbedingter Grund ist beispielsweise, dass ein mit einem Motor verbundenes Gebläse nicht in die falsche Richtung betrieben werden darf. Eine falsche Drehrichtung könnte zur Zerstörung mechanischer Baugruppen oder der Arbeitsmaschine führen und im schlimmsten Fall Gefahr für das arbeitende Personal bedeuten.

Oftmals sind Antriebssysteme derart mit Getrieben verbunden, dass ihre Drehrichtung nicht ohne weiteres erkennbar ist. In derartigen Fällen sind komplizierte und aufwändige Zerlegungsarbeiten notwendig, um die Drehrichtung mit freiem Auge einzusehen.

Die Drehrichtung wird über den Anschluss der Kabel für die Motorphase festgelegt. Jedoch ist die Verkabelung von elektrischen Antrieben in Industrieanlagen sehr fehleranfällig, da sie meist nicht direkt vom Schaltschrank zum Antrieb erfolgt, sondern häufig über mehrere Zwischenkreise und Zwischenklemmkästen geführt wird. Ferner weisen die Kabel meist gleichfarbige Adern auf, was eine weitere Fehlerquelle darstellt.

Um die Drehrichtung festzustellen, wird daher häufig ein Drehrichtungstest durchgeführt, bei dem der Motor in Bewegung versetzt wird. Ein derartiger Drehrichtungstest wird in manchen Fällen durch ein kurzes "Andrehen" des Motors (auch "Tipp-Betrieb" genannt) durchgeführt. Dafür sind meist elektrische Provisorien herzustellen, da ein Andrehen mit den Standardkomponenten meistens nicht möglich ist, weil es die Schaltelemente zu stark belastet. Während des Tipp-Betriebs kann beim Ausschalten des Motors (d.h. während die Maschine den vollen Anlaufstrom zieht) dieser den bis zu siebenfachen Nennstrom ziehen. Daraus folgt meist die Zerstörung des Motorschützes. Aufwändige und teure Reparaturen sind die Folge.

Außerdem ist ein derartiger Drehrichtungstest sehr aufwändig, denn dazu wird der Motor in der Regel mechanisch abgekoppelt, wobei eine bereits eingerichtete Kupplungsverbindung des Motors mit dem Antriebsstrang wieder geöffnet wird. Nach dem Drehrichtungstest wird der Motor wieder mit dem Antriebstrang gekuppelt und exakt eingerichtet. Der dadurch entstehende Arbeitsaufwand steigt mit der Dimension des Antriebs, da zusätzliche Hebemittel (z. B. ein Kran oder Hydraulikzylinder) erforderlich werden können.

Eine Beschädigung des Motors, mit ihm verbundenen Equipments oder der elektrischen Ausrüstung bei einem Drehrichtungstest oder infolge eines nicht durchgeführten Drehrichtungstests ist für ein Anlagenbauprojekt sehr ungünstig, da Fehler zu einem Zeitpunkt erkannt werden, zu dem Montagepersonal nicht mehr vor Ort ist und die Beschaffung von Ersatzausrüstung teuer und aufwändig ist.

Als Alternative zu einem Drehrichtungstest könnte eine passive Durchgangsprüfung der elektrischen Zuleitung mit einem Widerstandsmessgerät durchgeführt werden. Dies ist aufgrund der Weitläufigkeit von Industrieanlagen und der Entfernung zwischen Schaltschrank und Antrieb oftmals nur mit erheblichem Personal- und Materialaufwand durchführbar. Insbesondere sind dazu mindestens zwei Personen erforderlich und es müssen elektrische Provisorien hergestellt werden.

Der Erfindung liegt die Aufgabe zugrunde, ein verbessertes Verfahren zur Ermittlung einer Motordrehrichtung eines über Versorgungsleitungen mit einer mehrphasigen Versorgungsspannung betriebenen Elektromotors anzugeben. Ferner liegt der Erfindung die Aufgabe zugrunde, eine Vorrichtung zur Durchführung des Verfahrens anzugeben.

Die Aufgabe wird erfindungsgemäß hinsichtlich des Verfahrens durch die Merkmale des Anspruchs 1 und hinsichtlich der Vorrichtung durch die Merkmale des Anspruchs 4 gelöst.

Vorteilhafte Ausgestaltungen der Erfindung sind Gegenstand der Unteransprüche.

Bei dem erfindungsgemäßen Verfahren zur Ermittlung einer Motordrehrichtung eines über Versorgungsleitungen mit einer mehrphasigen Versorgungsspannung betriebenen Elektromotors werden zunächst die relativen Phasenverschiebungen zwischen den an den Versorgungsleitungen anliegenden Phasenspannungen ermittelt. Ohne den Elektromotor in Drehung zu versetzen werden dann an die Versorgungsleitungen elektrische Identifikationssignale ausgegeben, die eine eindeutige Zuordnung der ermittelten Phasenverschiebungen zu den Versorgungsleitungen ermöglichen. Die Identifikationssignale werden motorseitig ausgelesen und aus den motorseitig ausgelesenen Identifikationssignalen wird die Motordrehrichtung ermittelt.

Dazu werden als Identifikationssignale Kleinspannungssignale verwendet, deren Spannungen deutlich kleiner als eine Nennspannung des Elektromotors sind, so dass der Elektromotor durch die Identifikationssignale nicht in Drehung versetzt wird und die Identifikationssignale für Bedienpersonal ungefährlich sind. Die Identifikationssignale können dabei digital oder analog gestaltet sein.

Das erfindungsgemäße Verfahren ermöglicht also die Ermittlung einer Motordrehrichtung eines Elektromotors, ohne den Elektromotor in Drehung zu versetzen. Dadurch werden Beschädigungen des Elektromotors oder von mit ihm verbundenen Maschinen, Maschinenelementen oder elektrischer Komponenten vermieden, die durch einen Betrieb des Elektromotors mit einer falschen Motordrehrichtung verursacht werden können. Ferner kann die Ermittlung der Motordrehrichtung mittels der Erzeugung und Auswertung der Identifikationssignale erfolgen, ohne den Elektromotor von mit ihm verbundenen Getriebeteilen, Maschinen oder Maschinenelementen trennen zu müssen oder aufwändige Zerlegungsarbeiten an Antriebssträngen vorzunehmen, so dass die Ermittlung der Motordrehrichtung ohne hohen Aufwand erfolgen kann.

Eine Ausgestaltung der Erfindung sieht vor, dass die Verbindung der Versorgungsspannung mit dem Elektromotor während der Ausgabe der Identifikationssignale unterbrochen wird.

Durch die Trennung des Elektromotors von der Versorgungsspannung während der Ausgabe der Identifikationssignale wird vorteilhaft sichergestellt, dass der Elektromotor während der Ermittlung der Motordrehrichtung tatsächlich nicht in Drehung versetzt wird.

Eine weitere Ausgestaltung der Erfindung sieht vor, dass die Phasenverschiebungen zwischen den an den Versorgungsleitungen anliegenden Phasenspannungen ermittelt werden, indem Zeiten erfasst werden, während derer diese Phasenspannungen ein vorgegebenes Vorzeichen aufweisen, und der zeitliche Versatz dieser Zeiten für die verschiedenen Phasenspannungen ermittelt und ausgewertet wird.

Diese Bestimmung der Phasenverschiebungen zwischen den an den Versorgungsleitungen anliegenden Phasenspannungen ist vorteilhaft, da sie auf relativ einfache, unten näher beschriebener Weise realisiert werden kann und zuverlässig ist.

Eine erfindungsgemäße Vorrichtung zur Durchführung des erfindungsgemäßen Verfahrens umfasst einen Signalgenerator zur Ermittlung der relativen Phasenverschiebungen zwischen an ersten Versorgungsleitungen, die die Versorgungsspannung mit einem Hauptschalter der elektrischen Spannungsversorgung des Elektromotors verbinden, anliegenden Phasenspannungen, Erzeugung von Identifikationssignalen, die den Elektromotor nicht in Drehung versetzen, und Ausgabe der Identifikationssignale an zweite Versorgungsleitungen, die innerhalb des Hauptschalters jeweils mit einer ersten Versorgungsleitung verbindbar sind und den Hauptschalter mit dem Motor verbinden , sowie ein Ausleseinstrument zur motorseitigen Auslesung der Identifikationssignale, eine Analyseeinheit zur Ermittlung der Motordrehrichtung aus den motorseitig ausgelesenen Identifikationssignalen, und wenigstens eine Ausgabeeinheit zur Ausgabe der ermittelten Motordrehrichtung.

Eine derartige Vorrichtung ermöglicht die Durchführung des erfindungsgemäßen Verfahrens mit den oben genannten Vorteilen.

Eine Ausgestaltung der Erfindung sieht vor, dass der Signalgenerator Synchronisationseingänge, Identifikationsausgänge und eine Steuerung aufweist, wobei jeder Synchronisationseingang mit einer ersten Versorgungsleitung und jeder Identifikationsausgang mit einer zweiten Versorgungsleitung elektrisch verbindbar ist und die Steuerung dazu ausgebildet ist, die relativen Phasenverschiebungen zwischen den an den Synchronisationseingängen anliegenden Phasenspannungen zu ermitteln, aus den ermittelten Phasenverschiebungen die Identifikationssignale zu erzeugen und die Identifikationssignale an die Identifikationsausgänge auszugeben.

Über die Synchronisationseingänge und die Identifikationsausgänge ist der Signalgenerator vorteilhaft an die ersten Versorgungsleitungen zur Ermittlung der Phasenverschiebungen zwischen den an diesen Versorgungsleitungen anliegenden Phasenspannungen und zur Ausgabe der Identifikationssignale anschließbar. Mittels der Steuerung wird vorteilhaft eine Auswertung der an den Identifikationsausgängen empfangenen Signale und die Erzeugung entsprechender Identifikationssignale ermöglicht.

Eine weitere Ausgestaltung der Erfindung sieht vor, dass zwischen jeden Synchronisationseingang und die Steuerung ein Optokoppler mit einer Leuchtdiode und einem optischen Empfänger geschaltet ist, wobei die Leuchtdiode mit dem Synchronisationseingang verbunden ist und der optische Empfänger mit der Steuerung verbunden ist.

Durch einen Optokoppler mit einer Leuchtdiode können vorteilhaft die Zeiten ermittelt werden, zu denen eine mit der Leuchtdiode verbundene Phasenspannung Halbwellen eines bestimmten Vorzeichens aufweist. Durch die Ermittlung der zeitlichen Versätze derartiger Zeiten zwischen den verschiedenen Phasenspannungen können daher vorteilhaft die Phasenverschiebungen zwischen den Phasenspannungen ermittelt werden.

Bei der vorgenannten Ausgestaltung der Erfindung ist die Leuchtdiode vorzugsweise über eine kapazitive Spannungsteilerschaltung mit dem Synchronisationseingang verbunden.

Durch eine Spannungsteilerschaltung kann die an der Leuchtdiode anliegende Spannung vorteilhaft an die Leuchtdiode angepasst werden.

Eine weitere Ausgestaltung der Erfindung sieht vor, dass das Ausleseinstrument für jede zweite Versorgungsleitung einen Ausleseeingang aufweist, der mit einer zweiten Versorgungsleitung elektrisch verbindbar ist.

Durch derartige Ausleseeingänge kann das Ausleseinstrument vorteilhaft mit jeder der zweiten Versorgungsleitungen verbunden werden, um ein über die jeweilige Versorgungsleitung übermitteltes Identifikationssignal zu empfangen.

Eine weitere Ausgestaltung der Erfindung sieht vor, dass das Ausleseinstrument als ein Mobilgerät ausgebildet ist.

Dadurch wird vorteilhaft ermöglicht, die Motordrehrichtungen verschiedener Elektromotoren mit derselben Vorrichtung zu ermitteln.

Eine alternative Ausgestaltung sieht vor, dass das Ausleseinstrument in den Motor integriert ist.

Diese Ausgestaltung erfordert kein separates Ausleseinstrument.

Weitere Ausgestaltungen der Erfindung sehen vor, dass die Analyseeinheit und/oder wenigstens eine Ausgabeeinheit in dem Ausleseinstrument integriert sind.

Dadurch wird die Ermittlung, Auswertung und/oder Ausgabe der Motordrehrichtung mittels eines Gerätes und daher in besonders kompakter Weise ermöglicht.

Eine weitere Ausgestaltung der Erfindung sieht eine als Flüssigkristallanzeigeeinheit oder akustischer Signalgeber oder Leuchtdiode ausgebildete Ausgabeeinheit vor.

Derartige Ausgabeeinheiten eignen sich besonders vorteilhaft zur Ausgabe der Motordrehrichtung.

Eine weitere Ausgestaltung der Erfindung sieht vor, dass die Steuerung als ein Mikrocontroller ausgebildet ist und/oder dass die Analyseeinheit als ein Mikrocontroller ausgebildet ist.

Mikrocontroller sind leistungsfähige und kostengünstige Bauteile zur Realisierung der Funktionen der Steuerung des Signalgenerators bzw. der Analyseeinheit des Ausleseinstruments.

Eine weitere Ausgestaltung der Erfindung sieht vor, dass der Signalgenerator in den Hauptschalter oder in einen Frequenzumrichter integriert ist.

Eine alternative Ausgestaltung der Erfindung sieht vor, dass der Signalgenerator als eine Baugruppe ausgeführt ist, die von dem Hauptschalter unabhängig ist und einen Signalgeneratorschalter zum Ein- und Ausschalten des Signalgenerators aufweist.

Diese Anordnungen des Signalgenerators ermöglichen vorteilhaft eine einfache Integration des Signalgenerators in eine vorhandene Baugruppe, beispielsweise einen Schaltschrank, die die Versorgungsspannung mit dem Elektromotor verbindet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: schematisch einen Schaltplan einer Antriebsanlage mit mehreren Elektromotoren und einer Vorrichtung zur Ermittlung einer Motordrehrichtung,
- FIG 2: schematisch einen Schaltplan eines Signalgenerators,
- FIG 3: schematisch einen Schaltplan eines Ausleseinstruments,
- FIG 4: schematisch eine Eingangsstufe eines Signalgenerators mit einer Kopplung eines Synchronisationseingangs an die Steuerung des Signalgenerators,
- FIG 5: schematisch zeitliche Verläufe einer an einem Synchronisationseingang anliegenden Spannung, eines durch eine mit dem Synchronisationseingang verbundene Leuchtdiode fließenden Stroms und eines Ausgangspulses des die Leuchtdiode enthaltenden Optokopplers,
- FIG 6: schematisch eine Ausgangsstufe eines Signalgenerators mit einer Kopplung der Steuerung an einen Identifikationsausgang des Signalgenerators,
- FIG 7: einen zeitlichen Verlauf eines motorseitig ausgelesenen Identifikationssignals in einer ersten zeitlichen Auflösung, und
- FIG 8: einen zeitlichen Verlauf eines motorseitig ausgelesenen Identifikationssignals in einer zweiten zeitlichen Auflösung.

Einander entsprechende Teile sind in allen Figuren mit den gleichen Bezugszeichen versehen.

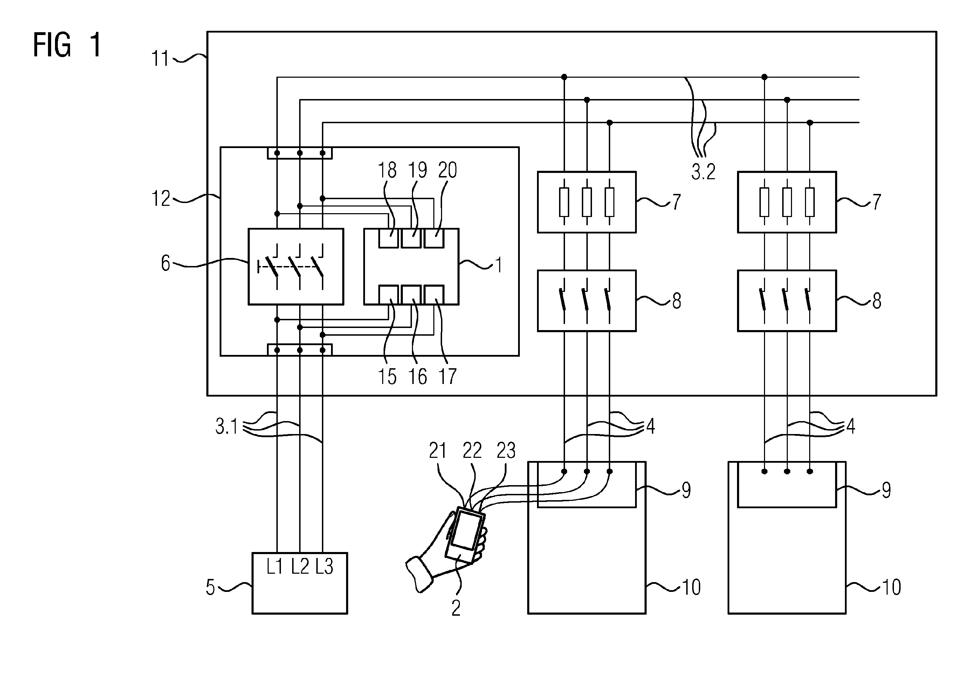

Figur 1 zeigt schematisch einen Schaltplan einer Antriebsanlage mit mehreren Elektromotoren 10, die jeweils über drei erste Versorgungsleitungen 3.1 mit einer dreiphasigen Versorgungsspannung 5 betrieben werden (in Figur 1 sind nur zwei Elektromotoren 10 dargestellt; es können jedoch auch mehr als zwei sein). An jeder ersten Versorgungsleitung 3.1 liegt eine Phasenspannung L1, L2, L3 an. Die Phasenspannungen L1, L2, L3 sind jeweils Wechselspannungen gleicher Frequenz und paarweise gegeneinander betragsmäßig um 120 Grad phasenverschoben.

Die ersten Versorgungsleitungen 3.1 sind in einen Schaltschrank 11 geführt. In dem Schaltschrank 11 befindet sich ein Hauptschalter 12 der elektrischen Verbindung der Elektromotoren 10 mit der Versorgungsspannung 5.

In dem Hauptschalter 12 ist jede erste Versorgungsleitung 3.1 mit einer ihr zugeordneten aus dem Hauptschalter 12 herausgeführten zweiten Versorgungsleitung 3.2 verbindbar. Hinter dem Hauptschalter 12 verzweigt sich jede zweite Versorgungsleitung 3.2 innerhalb des Schaltschranks 11 zu den einzelnen Elektromotoren 10. In den zu einem Elektromotor 10 führenden Zweigen 4 der zweiten Versorgungsleitungen 3.2 sind in dem Schaltschrank 11 Sicherungen 7 und ein Motorschütz 8 für den jeweiligen Elektromotor 10 angeordnet. Diese Zweige 4 der zweiten Versorgungsleitungen 3.2 sind vom Schaltschrank 11 zu dem jeweiligen Elektromotor 10 geführt und mittels eines Motorklemmbretts 9 mit diesem Elektromotor 10 verbunden.

Der Hauptschalter 12 weist einen Ein/Aus-Schalter 6 auf, mittels dessen die Verbindungen der ersten Versorgungsleitungen 3.1 mit den zweiten Versorgungsleitungen 3.2 unterbrochen werden können. Ferner ist in dem in Figur 1 dargestellten Ausführungsbeispiel in den Hauptschalter 12 ein Signalgenerator 1 einer Vorrichtung zur Ermittlung der Motordrehrichtungen der Elektromotoren 10 integriert. Dabei weist der Hauptschalter 12 neben dem Ein/Aus-Schalter 6 noch einen weiteren (nicht dargestellten) Signalgeneratorschalter auf, in dessen Einschaltzustand der Ein/Aus-Schalter 6 geöffnet und der Signalgenerator 1 zur Durchführung der Ermittlung einer Motordrehrichtung aktiviert wird.

Der Signalgenerator 1 weist für jede erste Versorgungsleitung 3.1 einen Synchronisationseingang 15, 16, 17 auf, der mit der jeweiligen ersten Versorgungsleitung 3.1 elektrisch verbunden ist. Ferner weist der Signalgenerator 1 für jede zweite Versorgungsleitung 3.2 einen Identifikationsausgang 18, 19, 20 auf, der hinter dem Ein/Aus-Schalter 6 und zwar zwischen dem Ein/Aus-Schalter 6 und der Verzweigung der jeweiligen zweiten Versorgungsleitung 3.2 zu den Elektromotoren 10 mit dieser zweiten Versorgungsleitung 3.2 elektrisch verbunden ist.

Neben dem Signalgenerator 1 umfasst die Vorrichtung zur Ermittlung der Motordrehrichtungen der Elektromotoren 10 ein Ausleseinstrument 2, das für jede zweite Versorgungsleitung 3.2 einen Ausleseeingang 21, 22, 23 aufweist, der mit einer zweiten Versorgungsleitung 3.2 elektrisch verbindbar ist. Das Ausleseinstrument 2 ist als ein tragbares Mobilgerät ausgebildet. Zur Ermittlung einer Motordrehrichtung eines Elektromotors 10 werden die Ausleseeingänge 21, 22, 23 des Ausleseinstruments 2 am Motorklemmbrett 9 dieses Elektromotors 10 mit jeweils einer zweiten Versorgungsleitung 3.2 verbunden. Jeder Ausleseeingang 21, 22, 23 des Ausleseinstruments 2 wird dabei mit einer bestimmten ihm zugeordneten Klemme des Motorklemmbretts 9 verbunden. Um Verwechselungen zu vermeiden, sind die Ausleseeingänge 21, 22, 23 deshalb mit einer Kennzeichnung versehen, die ihre Zuordnung zu den Klemmen der Motorklemmbretter 9 angibt.

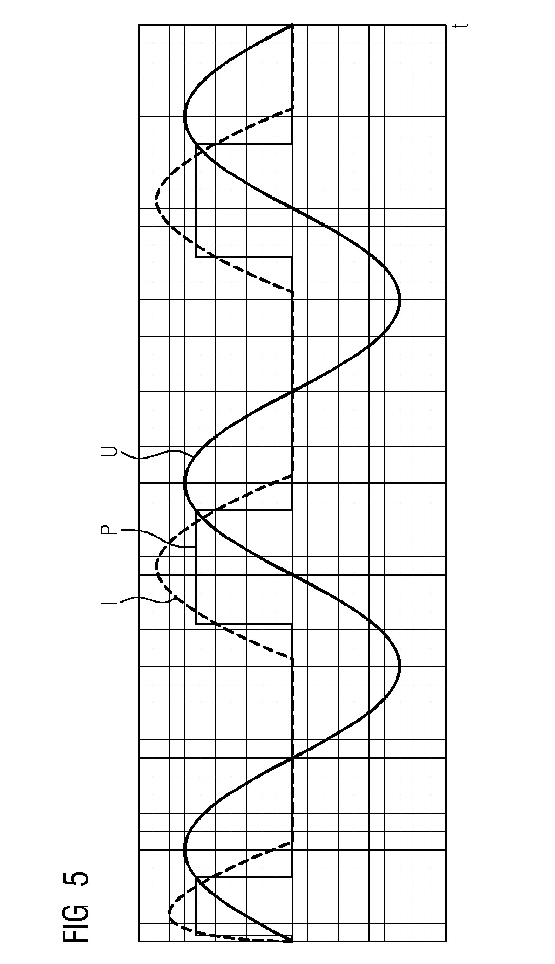

Erfindungsgemäß werden zur Ermittlung einer Motordrehrichtung eines Elektromotors 10 mittels des Signalgenerators 1 die relativen Phasenverschiebungen zwischen den an den ersten Versorgungsleitungen 3.1 und damit an den Synchronisationseingängen 15, 16, 17 des Signalgenerators 1 anliegenden Phasenspannungen L1, L2, L3 ermittelt (siehe Figur 5 und deren Beschreibung). Dann werden bei mittels des Ein/Aus-Schalters 6 unterbrochenen Verbindungen der ersten Versorgungsleitungen 3.1 mit den zweiten Versorgungsleitungen 3.2 mittels des Signalgenerators 1 über dessen Identifikationsausgänge 18, 19, 20 an die zweiten Versorgungsleitungen 3.2 Identifikationssignale ausgegeben, die eine eindeutige Zuordnung der ermittelten Phasenverschiebungen zu den ersten Versorgungsleitungen 3.1 ermöglichen.

Die Identifikationssignale sind dabei Kleinspannungssignale, deren Spannungen deutlich kleiner als eine Nennspannung der Elektromotoren 10 sind, so dass die Elektromotoren 10 durch die Identifikationssignale nicht in Drehung versetzt werden und die Identifikationssignale für Bedienpersonal ungefährlich sind. Die Identifikationssignale können dabei digital oder analog moduliert werden.

Die Identifikationssignale werden mittels des Ausleseinstruments 2 motorseitig ausgelesen, wobei die Ausleseeingänge 21, 22, 23 des Ausleseinstruments 2 in der oben beschriebenen Weise über das Motorklemmbrett 9 des betreffenden Elektromotors 10 mit den dort eingehenden Zweigen 4 der zweiten Versorgungsleitungen 3.2 verbunden werden. Aus den ausgelesenen Identifikationssignalen wird mittels des Ausleseinstruments 2 schließlich die Motordrehrichtung ermittelt und ausgegeben.

Die folgende erste Tabelle zeigt beispielhaft eine Zuordnung von ermittelten Phasenverschiebungen zwischen an den Synchronisationseingängen 15, 16, 17 anliegenden Phasenspannungen L1, L2, L3 und über die Identifikationsausgänge 18, 19, 20 auszugebenden Identifikationssignalen. Dabei ist angenommen, dass die Phasenspannungen L1, L2, L3 gemäß ihrer relativen Phasenverschiebungen geordnet sind, und dass diesen Phasenspannungen L1, L2, L3 jeweils ein mit ISU, ISV, ISW bezeichnetes Identifikationssignal zugeordnet wird:

| Synchronisationseingang | | | Identifikationsausgang | | |
|---|---|---|---|---|---|
| 15 | 16 | 17 | 18 | 19 | 20 |
| L1 | L2 | L3 | ISU | ISV | ISW |
| L1 | L3 | L2 | ISU | ISW | ISV |
| L2 | L1 | L3 | ISV | ISU | ISW |
| L2 | L3 | L1 | ISV | ISW | ISU |
| L3 | L1 | L2 | ISW | ISU | ISV |
| L3 | L2 | L1 | ISW | ISV | ISU |

Die folgende zweite Tabelle zeigt beispielhaft eine Zuordnung der an den Ausleseeingängen 21, 22, 23 des Ausleseinstruments 2 ausgelesenen Identifikationssignale zu einer Motordrehrichtung eines Elektromotors 10, wobei angenommen ist, dass ein Rechtslauf des Elektromotors 10 einer zyklischen Permutation der Reihenfolge (ISU, ISV, ISW) der Identifikationssignale an den Klemmen eines Motorklemmbretts 9 entspricht und ein Linkslauf einer entsprechenden antizyklischen Permutation:

| Ausleseeingang | | | Motordrehrichtung | |
|---|---|---|---|---|
| 21 | 22 | 23 | Rechtslauf | Linkslauf |
| ISU | ISV | ISW | X | |
| ISU | ISW | ISV | | X |
| ISV | ISU | ISW | | X |
| ISV | ISW | ISU | X | |
| ISW | ISU | ISV | X | |
| ISW | ISV | ISU | | X |

Gemäß den obigen beiden Tabellen lässt sich aus anhand der von dem Signalgenerator 1 erzeugten und mittels des Ausleseinstruments 2 ausgelesenen Identifikationssignalen eindeutig eine Motordrehrichtung eines Elektromotors 10 ermitteln, sofern die Motordrehrichtung durch eine festgelegte Permutationen der Verteilung der Phasenspannungen L1, L2, L3 auf die Klemmen des Motorklemmbretts 9 des Elektromotors 10 bestimmt ist.

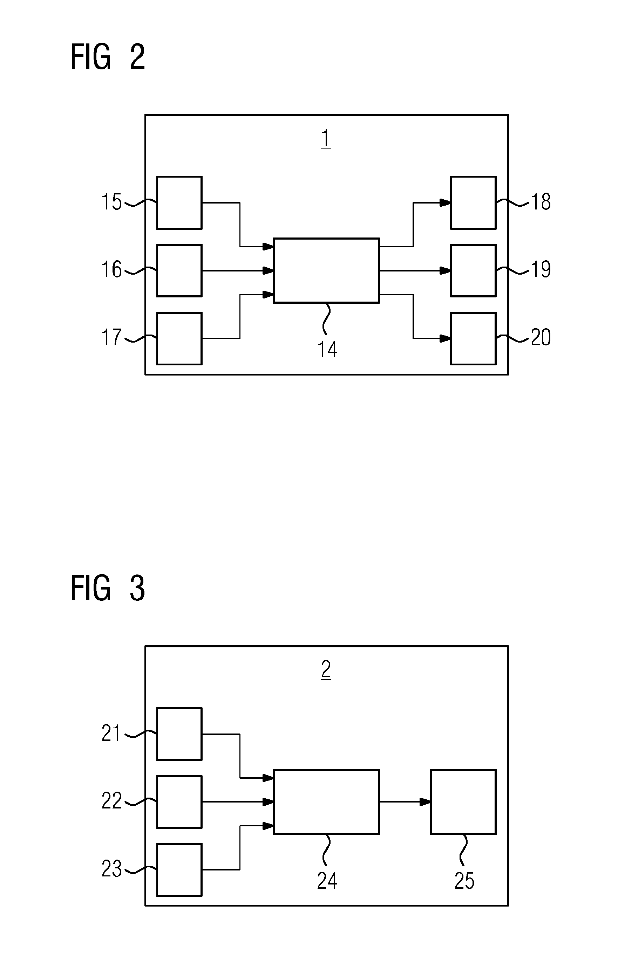

Figur 2 zeigt schematisch einen Schaltplan eines Signalgenerators 1. Die Synchronisationseingänge 15, 16, 17 und die Identifikationsausgänge 18, 19, 20 sind jeweils mit einer Steuerung 14 verbunden. Die Steuerung 14 ermittelt aus den an den Synchronisationseingängen 15, 16, 17 anliegenden Phasenspannungen L1, L2, L3 die relativen Phasenverschiebungen dieser Phasenspannungen L1, L2, L3, erzeugt aus den ermittelten Phasenverschiebungen entsprechende Identifikationssignale und gibt die Identifikationssignale über die Identifikationsausgänge 18, 19, 20 an die zweiten Versorgungsleitungen 3.2 ab. Die Steuerung 14 ist beispielsweise als ein Mikrocontroller ausgeführt.

Figur 3 zeigt schematisch einen Schaltplan eines Ausleseinstruments 2. Die Ausleseeingänge 21, 22, 23 des Ausleseinstruments 2 sind jeweils mit einer Analyseeinheit 24 verbunden, die wiederum mit einer Ausgabeeinheit 25 verbunden ist. Die Ausleseeingänge 21, 22, 23 können jeweils eine geeignete (nicht dargestellte) Vorschaltelektronik aufweisen.

Die Analyseeinheit 24 ermittelt aus den an den Ausleseeingängen 21, 22, 23 eingehenden Identifikationssignalen die Motordrehrichtung und gibt das Ergebnis an die Ausgabeeinheit 25 aus, mittels derer die ermittelte Motordrehrichtung ausgegeben wird. Die Analyseeinheit 24 ist beispielsweise als ein Mikrocontroller ausgeführt. Die Ausgabeeinheit 25 ist beispielsweise als eine Flüssigkristallanzeigeeinheit oder als ein akustischer Signalgeber oder als wenigstens eine Leuchtdiode ausgeführt. Beispielsweise ist die Ausgabeeinheit als eine rot leuchtende Leuchtdiode ausgeführt, die aufleuchtet, wenn als Motordrehrichtung ein Linkslauf eines Elektromotors 10 ermittelt wird. In einem anderen Ausführungsbeispiel umfasst die Ausgabeeinheit 25 eine rot leuchtende und eine grün leuchtende Leuchtdiode, wobei die grün leuchtende Leuchtdiode aufleuchtet, wenn als Motordrehrichtung ein Rechtslauf eines Elektromotors 10 ermittelt wird, und die rot leuchtende Leuchtdiode aufleuchtet, wenn als Motordrehrichtung ein Linkslauf eines Elektromotors 10 ermittelt wird.

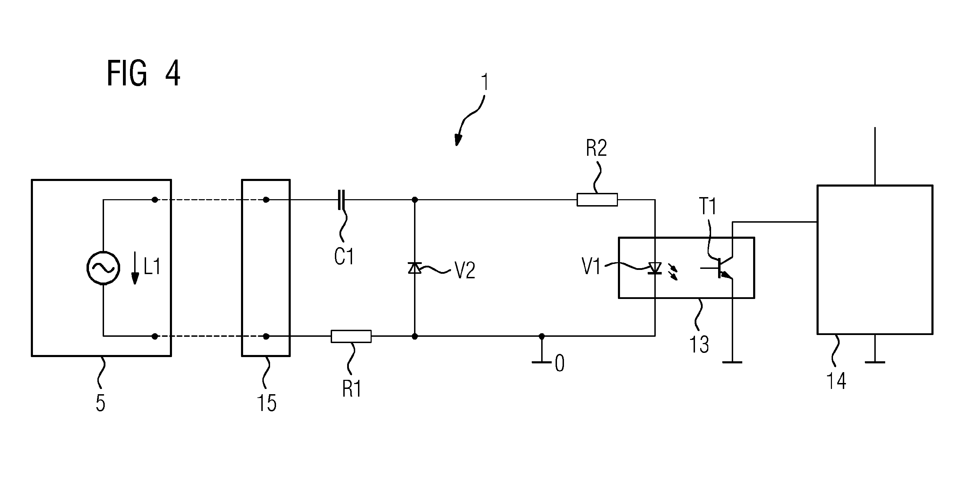

Figur 4 zeigt schematisch eine Eingangsstufe eines Signalgenerators 1 mit einer Kopplung eines Synchronisationseingangs 15 an die Steuerung 14 des Signalgenerators 1. Am Synchronisationseingang 15 liegt eine Phasenspannung L1 der Versorgungsspannung 5 an.

Zwischen den Synchronisationseingang 15 und die Steuerung 14 ist ein Optokoppler 13 mit einer Leuchtdiode V1 und einem optischen Empfänger T1 geschaltet, wobei die Leuchtdiode V1 mit dem Synchronisationseingang 15 verbunden ist und der optische Empfänger T1 mit der Steuerung 14 verbunden ist. Der optische Empfänger T1 ist beispielsweise als ein Fototransistor ausgebildet.

Die Leuchtdiode V1 ist über eine kapazitive Spannungsteilerschaltung mit dem Synchronisationseingang 15 verbunden. Die Spannungsteilerschaltung weist einen Kondensator C1, dazu in Reihe geschaltete Widerstände R1, R2 sowie eine Diode V2 auf. Die Leuchtdiode V1 ist zwischen den Widerständen R1, R2 angeordnet.

Mittels der Leuchtdiode V1 wird während jeder Halbwelle eines vorgegebenen Vorzeichens der Phasenspannung L1 Licht zu dem optischen Empfänger T1 ausgesendet und von dem optischen Empfänger T1 ein entsprechendes Pulssignal zu der Steuerung 14 übertragen.

Figur 5 zeigt schematisch jeweils in Abhängigkeit von einer Zeit t den Spannungsverlauf U einer an einem Synchronisationseingang 15, 16, 17 anliegenden Phasenspannung L1, L2, L3, den dazu korrespondierenden Stromverlauf I eines durch eine mit dem Synchronisationseingang 15, 16, 17 gemäß Figur 4 verbundene Leuchtdiode V1 fließenden Stroms und den resultierenden Pulssignalverlauf P eines Pulssignals am Ausgang des die Leuchtdiode V1 enthaltenden Optokopplers 13.

Die Steuerung 14 empfängt die Pulssignalverläufe P aller mit den Synchronisationseingängen 15, 16, 17 verbundenen Optokoppler 13 und ermittelt durch Auswertung des zeitlichen Versatzes dieser Pulssignalverläufe P1 die Phasenverschiebungen zwischen den Phasenspannungen L1, L2, L3.

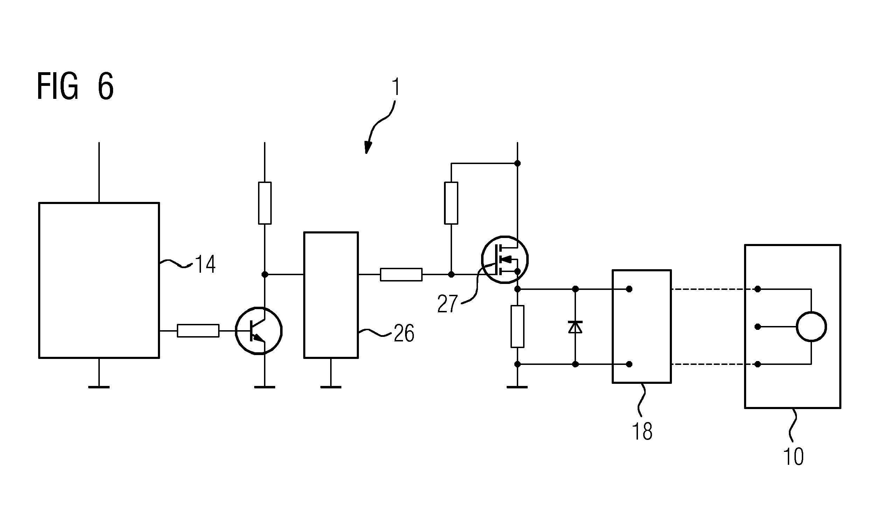

Figur 6 zeigt schematisch eine Ausgangsstufe eines Signalgenerators 1 mit einer Kopplung der Steuerung 14 an einen Identifikationsausgang 18 des Signalgenerators 1. Diese Kopplung enthält insbesondere einen MOS-FET (= Metall-Oxid-Halbleiter-Feldeffekttransistor) 27, der ausgangsseitig mit dem Identifikationsausgang 18 und eingangsseitig über einen MOS-FET-Treiber 26 mit der Steuerung 14 des Signalgenerators 1 verbunden ist.

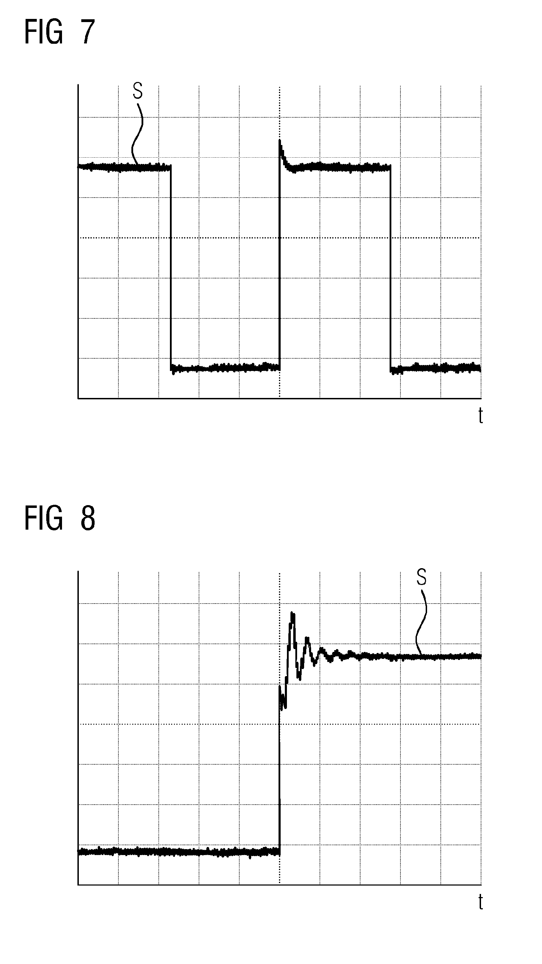

Die Figuren 7 und 8 zeigen einen zeitlichen Auslesesignalverlauf S eines an einem Ausleseeingang 21, 22, 23 des Ausleseinstruments 2 empfangenen Identifikationssignals. Figur 8 zeigt den Auslesesignalverlauf S in einer gegenüber Figur 7 zehnfach erhöhten Zeitauflösung, woraus ersichtlich ist, dass das Pulssignal bis auf eine kurze Einschwingzeit der Motorspannung des jeweiligen Elektromotors 10 einen in sehr guter Näherung rechtförmigen zeitlichen Verlauf annimmt. Dieser Verlauf entspricht dem in Figur 5 dargestellten Pulssignalverlauf P des vom zugehörigen Optokoppler 13 des Signalgenerators 1 ausgegebenen Pulssignals und ist daher von der Ausgabeeinheit 25 des Ausleseinstruments 2 in einfacher und eindeutiger Weise auswertbar.

Das oben anhand der Figuren 1 bis 8 beschriebene Ausführungsbeispiel kann in vielfältiger Hinsicht abgewandelt werden.

Beispielsweise kann der Signalgenerator 1 auch als eine separate Baugruppe im Schaltschrank 11 verbaut sein, die von dem Hauptschalter 12 unabhängig ist und einen Signalgeneratorschalter zum Ein- und Ausschalten des Signalgenerators aufweist.

Ferner kann der Signalgenerator 1 in Abwandlung des oben beschriebenen Ausführungsbeispiels auch nur zwei statt drei Synchronisationseingänge 15, 16, 17 und diesen entsprechende Identifikationsausgänge 18, 19, 20 aufweisen, da bei gegeneinander um jeweils betragsmäßig um 120 Grad phasenverschobenen Phasenspannungen L1, L2, L3 die Kenntnis der Phasenverschiebung zweier dieser Phasenspannungen L1, L2, L3 die relative Phasenverschiebung der dritten Phasenspannung L1, L2, L3 festlegt.

Außerdem kann das beschriebene Ausführungsbeispiel in offensichtlicher Weise zur Bestimmung der Motordrehrichtungen von Elektromotoren 10 verallgemeinert werden, die mit einer mehr als dreiphasigen Versorgungsspannung 5 betrieben werden. Dazu müssen im Wesentlichen nur die Anzahlen der Synchronisationseingänge 15, 16, 17, Identifikationsausgänge 18, 19, 20 und Ausleseeingänge 21, 22, 23 der Anzahl der Phasenspannungen L1, L2, L3 angepasst werden.

Des Weiteren können die Analyseeinheit 24 und/oder die Ausgabeeinheit 25 auch außerhalb des Ausleseinstruments 2 angeordnet werden, wobei die mittels des Ausleseinstruments 2 ausgelesenen und/oder ausgewerteten Identifikationssignale zur Ermittlung der Motordrehrichtung und/oder der Ausgabe der Motordrehrichtung beispielsweise als Funksignale von dem Ausleseinstrument 2 zu der Analyseeinheit 24 oder Ausgabeeinheit 25 übermittelt werden.

Obwohl die Erfindung im Detail durch bevorzugte Ausführungsbeispiele näher illustriert und beschrieben wurde, so ist die Erfindung nicht durch diese offenbarten Beispiele eingeschränkt und andere Variationen können vom Fachmann hieraus abgeleitet werden, ohne den Schutzumfang der Erfindung zu verlassen.

## Patentansprüche

1. Verfahren zur Ermittlung einer Motordrehrichtung eines über Versorgungsleitungen (3.1, 3.2) mit einer mehrphasigen Versorgungsspannung (5) betriebenen Elektromotors (10), wobei
- die relativen Phasenverschiebungen zwischen den an den Versorgungsleitungen (3.1, 3.2) anliegenden Phasenspannungen (L1, L2, L3) ermittelt werden,
- ohne den Elektromotor (10) in Drehung zu versetzen an die Versorgungsleitungen (3.1, 3.2) elektrische Identifikationssignale ausgegeben werden, die eine eindeutige Zuordnung der ermittelten Phasenverschiebungen zu den Versorgungsleitungen (3.1, 3.2) ermöglichen,
- die Identifikationssignale motorseitig ausgelesen werden,
- und aus den motorseitig ausgelesenen Identifikationssignalen die Motordrehrichtung ermittelt wird.

2. Verfahren nach Anspruch 1,
**dadurch gekennzeichnet, dass** die Versorgungsspannung (5) an dem Elektromotor (10) während der Ausgabe der Identifikationssignale nicht anliegt.

3. Verfahren nach einem der vorhergehenden Ansprüche,
**dadurch gekennzeichnet, dass** die Phasenverschiebungen zwischen den an den Versorgungsleitungen (3.1, 3.2) anliegenden Phasenspannungen (L1, L2, L3) ermittelt werden, indem Zeiten erfasst werden, während derer diese Phasenspannungen (L1, L2, L3) ein vorgegebenes Vorzeichen aufweisen, und der zeitliche Versatz dieser Zeiten für die verschiedenen Phasenspannungen (L1, L2, L3) ermittelt und ausgewertet wird.

4. Vorrichtung zur Durchführung des Verfahrens nach einem der vorhergehenden Ansprüche, umfassend
- einen Signalgenerator (1) zur Ermittlung der relativen Phasenverschiebungen zwischen an ersten Versorgungsleitungen (3.1), die die Versorgungsspannung (5) mit einem Hauptschalter (12) der elektrischen Spannungsversorgung des Elektromotors (10) verbinden, anliegenden Phasenspannungen (L1, L2, L3), Erzeugung von Identifikationssignalen, die den Elektromotor (10) nicht in Drehung versetzen, und Ausgabe der Identifikationssignale an zweite Versorgungsleitungen (3.2), die innerhalb des Hauptschalters (12) jeweils mit einer ersten Versorgungsleitung (3.1) verbindbar sind und den Hauptschalter (12) mit dem Motor (10) verbinden,
- ein Ausleseinstrument (2) zur motorseitigen Auslesung der Identifikationssignale,
- eine Analyseeinheit (24) zur Ermittlung der Motordrehrichtung aus den motorseitig ausgelesenen Identifikationssignalen,
- und wenigstens eine Ausgabeeinheit (25) zur Ausgabe der ermittelten Motordrehrichtung.

5. Vorrichtung nach Anspruch 4,
**dadurch gekennzeichnet, dass** der Signalgenerator (1) Synchronisationseingänge (15, 16, 17), Identifikationsausgänge (18, 19, 20) und eine Steuerung (14) aufweist, wobei jeder Synchronisationseingang (15, 16, 17) mit einer ersten Versorgungsleitung (3.1) und jeder Identifikationsausgang (18, 19, 20) mit einer zweiten Versorgungsleitung (3.2) elektrisch verbindbar ist und die Steuerung (14) dazu ausgebildet ist, die relativen Phasenverschiebungen zwischen den an den Synchronisationseingängen (15, 16, 17) anliegenden Phasenspannungen (L1, L2, L3) zu ermitteln, aus den ermittelten Phasenverschiebungen die Identifikationssignale zu erzeugen und die Identifikationssignale an die Identifikationsausgänge (18, 19, 20) auszugeben.

6. Vorrichtung nach Anspruch 5,
**dadurch gekennzeichnet, dass** zwischen jeden Synchronisationseingang (15, 16, 17) und die Steuerung (14) ein Optokoppler (13) mit einer Leuchtdiode (V1) und einem optischen Empfänger (T1) geschaltet ist, wobei die Leuchtdiode (V1) mit dem Synchronisationseingang (15, 16, 17) verbunden ist und der optische Empfänger (T1) mit der Steuerung (14) verbunden ist.

7. Vorrichtung nach Anspruch 6,
**dadurch gekennzeichnet, dass** die Leuchtdiode (V1) über eine kapazitive Spannungsteilerschaltung mit dem Synchronisationseingang (15, 16, 17) verbunden ist.

8. Vorrichtung nach einem der Ansprüche 4 bis 7,
**dadurch gekennzeichnet, dass** das Ausleseinstrument (2) für jede zweite Versorgungsleitung (3.2) einen Ausleseeingang (21, 22, 23) aufweist, der mit einer zweiten Versorgungsleitung (3.2) elektrisch verbindbar ist.

9. Vorrichtung nach einem der Ansprüche 4 bis 8,
**dadurch gekennzeichnet, dass** das Ausleseinstrument (2) als ein Mobilgerät ausgebildet oder in den Motor (10) integriert ist.

10. Vorrichtung nach einem der Ansprüche 4 bis 9,
**dadurch gekennzeichnet, dass** die Analyseeinheit (24) in dem Ausleseinstrument (2) integriert ist.

11. Vorrichtung nach einem der Ansprüche 4 bis 10,
**dadurch gekennzeichnet, dass** wenigstens eine Ausgabeeinheit (25) in dem Ausleseinstrument (2) integriert ist.

12. Vorrichtung nach einem der Ansprüche 4 bis 11,
**gekennzeichnet durch** eine als Flüssigkristallanzeigeeinheit oder akustischer Signalgeber oder Leuchtdiode ausgebildete Ausgabeeinheit (25).

13. Vorrichtung nach einem der Ansprüche 4 bis 12,
**dadurch gekennzeichnet, dass** die Steuerung (14) als ein Mikrocontroller ausgebildet ist und/oder dass die Analyseeinheit (24) als ein Mikrocontroller ausgebildet ist.

14. Vorrichtung nach einem der Ansprüche 4 bis 13,
**dadurch gekennzeichnet, dass** der Signalgenerator (1) in den Hauptschalter (12) oder in einen Frequenzumrichter integriert ist.

15. Vorrichtung nach einem der Ansprüche 4 bis 13,
**dadurch gekennzeichnet, dass** der Signalgenerator (1) als eine Baugruppe ausgeführt ist, die von dem Hauptschalter (12) unabhängig ist und einen Signalgeneratorschalter zum Ein- und Ausschalten des Signalgenerators (1) aufweist.
